(19) Europäisches Patentamt
European Patent Office
Office européen des brevets

(11) **EP 3 974 870 A1**

(12) **EUROPEAN PATENT APPLICATION**
published in accordance with Art. 153(4) EPC

(43) Date of publication:
**30.03.2022 Bulletin 2022/13**

(51) Int Cl.:
*G01S 17/32* (2020.01)        *G01S 7/4915* (2020.01)
*H04W 64/00* (2009.01)        *G02B 5/08* (2006.01)
*G02B 5/20* (2006.01)         *G02B 1/10* (2015.01)

(21) Application number: **20827287.2**

(22) Date of filing: **12.06.2020**

(86) International application number:
**PCT/KR2020/007653**

(87) International publication number:
**WO 2020/256353 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2019  KR 20190072783**

(71) Applicant: **Seoul National University R & DB
Foundation
Seoul 08826 (KR)**

(72) Inventors:
• **KEE, Chang Don
  Seoul 06705 (KR)**
• **KIM, O Jong
  Seoul 08338 (KR)**

(74) Representative: **Jaeger, Michael David
Withers & Rogers LLP
2 London Bridge
London SE1 9RA (GB)**

(54) **INDOOR POSITIONING SYSTEM AND METHOD USING REFLECTED LIGHT**

(57)    An indoor positioning system using a reflected light according to an embodiment comprises: a reflection unit consisting of at least one reflective surface; and a user terminal for determining a location of a user on the basis of location information of the reflective surface and distance information from the user to the reflective surface. Each reflective surface is configured to reflect an incident optical signal as reflected lights having different frequencies, and the user terminal includes an optical signal transceiver. When the transmitted optical signal is reflected as a reflected light having a specific frequency (color) by a plurality of reflective surfaces, the user terminal may calculate a distance between the user terminal and the reflective surface by using the received reflected light and determine an indoor location of the user by combining the distance information and the location information of the reflective surface.

FIG. 1

## Description

[Technical Field]

The present disclosure relates to an indoor positioning system and method using reflected light, and more particularly, to a system and method for determining a user's location in an indoor environment using a terminal which transmits and receives an optical signal and a plurality of reflective surfaces which reflects the optical signal as reflected light of different frequencies (wavelengths).

[Background Art]

Recently, with the widespread of mobile devices such as smartphones, there is a rapid growth in the industry of location based services which provide content, advertisement and information based on the current user location. The most important consideration when providing the location based service is to accurately determine the user location.

In general, when the user is located outdoors, the user location may be determined by measuring the time taken to transmit a signal from a plurality of satellites to a user receiver using a satellite navigation system such as a global positioning system (GPS), and calculating the distance between the user and each satellite using the measured time.

However, when the user is located indoors, it is difficult to determine the user location using the satellite navigation system since the satellite signal cannot be reached. In particular, to implement autonomous driving and autonomous parking functionalities which are the key part of the fourth industrial revolution or to provide location based services (for example, pathfinding using smartphones, location based advertising and entertainment) in wide indoor spaces such as airports or large shopping malls, it is necessary to provide a high accuracy indoor positioning system.

The existing indoor location determination system chiefly uses a radio frequency (RF) communication device. For example, satellite-based, underground beacon-based, Wi-Fi/WLAN/Wireless LAN-based, Radiofrequency identification (RFID)-based, active RFID-based, mobile communication-based, Bluetooth-based, UWB-based, Zigbee-based, WiBro/WiMax-based and broadcast signal-based systems are used to predict the indoor location of the user.

The RFID-based cognitive navigation algorithm may be used in a system including a plurality of sensors. Accordingly, when the terminal receives a sensor signal near the user, rough information that the user is located near the corresponding sensor may be provided. However, location prediction accuracy is low, it is impossible to continuously find the location, and it is necessary to install the plurality of sensors such as RFID tags, leading to higher cost.

Subsequently, there is a method that predicts the location by measuring the intensity of the received signal. This method stores the actual location and the signal intensity at the corresponding location in a database, and predicts the user location by comparing the intensity of the received signal with data in the database. Since this method needs to store the signal intensity across all regions in the database, it requires high cost and long time to build the database, and when there are changes in indoor placement and other environmental changes, it is necessary to re-build the database.

One of the most commonly used methods calculates the user location by predicting the distance between a transmitter and a receiver using the received signal. Compared to the above-described methods, this method has relatively high accuracy, but to measure the location, it is necessary to install a plurality of transmitters, requiring high cost.

On the other hand, recently, many studies are being made on communication or navigation using light, and in particular, indoor navigation using light is being studied. However, the existing studies are made using the intensity of light from a light source or by broadcasting optical communication signals from light sources installed indoors, and in the same way as the above-described other systems, it requires high cost and has low prediction accuracy.

[Disclosure]

[Technical Problem]

The present disclosure is designed to overcome the limitations of the existing indoor positioning systems, i.e., low location prediction accuracy or high installation and maintenance cost of additional equipment. That is, the present disclosure is directed to providing a new type of positioning system for accurately measuring a user's indoor location at low cost.

[Technical Solution]

To solve the above-described problem, an indoor positioning system according to an embodiment includes a reflection unit including at least one reflective surface, and a user terminal for determining a location of a user based on location information of the reflective surface and distance information from the user to the reflective surface, wherein the reflective surface is configured to reflect an incident optical signal as reflected light of a specific frequency, and the user terminal includes an optical transmission unit to transmit the optical signal, an optical reception unit to receive the reflected light of the specific frequency reflected from the reflective surface, a distance calculation unit to calculate a distance from the user terminal to the reflective surface based on information acquired from the reflected optical signal received by the optical reception unit, a storage unit to store the location information of the reflective surface transmitted from a server, and a location determination unit to determine the location of the user based on the location information of the reflective surface and the distance information from the user terminal to each reflective surface.

In an embodiment, the distance calculation unit may calculate the distance from the user terminal to the reflective surface based on a time difference between a time at which the optical transmission unit transmitted the optical signal and a time at which the optical reception unit received the reflected light.

In an embodiment, the distance calculation unit may calculate the distance from the user terminal to the reflective surface using carrier-phase measurement of the reflected optical signal received by the reflection unit.

In an embodiment, the optical signal may include identification code to identify the user.

In an embodiment, the reflective surface may include a filter to reflect the light of the specific frequency in the incident optical signal.

In an embodiment, the reflective surface may be a mirror coated in a corresponding color to the specific frequency.

In an embodiment, the reflection unit may include at least two reflective surfaces, and each reflective surface may be configured to reflect the incident optical signal as the reflected light of different frequencies.

In an embodiment, the reflective surface may have a structure in which an angle of incidence and an angle of reflection of the optical signal are equal to each other.

In an embodiment, the optical reception unit may include at least one of an image sensor, a color sensor or a photo-diode.

An indoor positioning system using reflected light according to another embodiment includes at least one optical transmission/reception module installed indoors, and a reflection unit possessed by a user and configured to reflect an incident optical signal, wherein the optical transmission/reception module includes an optical transmission unit to transmit the optical signal including identification code of the optical transmission/reception module, an optical reception unit to receive the reflected light reflected from the reflection unit, and a distance calculation unit to calculate a distance from the optical transmission/reception module to the user based on a time difference between a time at which the optical transmission unit transmitted the optical signal and a time at which the optical reception unit received the reflected light, and wherein the optical transmission/reception module, a server or the user terminal determines the location of the user based on the location information of the optical transmission/reception module and the distance information from the optical transmission/reception module to the user.

In an embodiment, in case that the optical transmission/reception module or the server determines the location of the user, the optical transmission/reception module or the server may transmit the determined location information of the user to the user terminal.

In an embodiment, in case of a plurality of users, the reflection unit possessed by each user may be configured to reflect the incident optical signal as the reflected light of different frequencies.

In an embodiment, the reflection unit possessed by each user may include a filter to reflect light of a specific frequency in the incident optical signal.

In an embodiment, the reflection unit possessed by each user may be a mirror coated in a corresponding color to the specific frequency.

In an embodiment, the reflection unit may have a structure in which an angle of incidence and an angle of reflection of the optical signal are equal to each other.

To solve the above-described problem, an indoor positioning method according to an embodiment includes outputting an optical signal, receiving reflected light of a specific frequency reflected from each of at least one reflective surface, calculating a distance from the user terminal to the reflective surface based on information acquired from the received reflected optical signal, acquiring location information of the reflective surfaces, and determining a location of a user based on the location information of the reflective surface and the distance information from the user terminal to the reflective surface.

In an embodiment, the distance from the user terminal to the reflective surface may be calculated based on a time difference between a transmission time of the optical signal and a reception time of the reflected light.

In an embodiment, the distance from the user terminal to the reflective surface may be calculated using carrier-phase measurement of the received reflected optical signal.

There may be provided a computer program stored in a computer-readable recording medium, for implementing the indoor positioning method according to an embodiment.

[Advantageous Effects]

According to the indoor positioning system in accordance with an embodiment of the present disclosure, when an optical signal transmitted from a terminal is reflected as reflected light having a specific frequency (wavelength) by a reflective surface installed indoors, the distance between the terminal and the reflective surface may be calculated from the received reflected light, and a indoor location may be determined based on distance information and location information of the reflective surface.

The existing wireless frequency based indoor positioning system has low accuracy or requires installation and maintenance costs of additional equipment. According to an embodiment of the present disclosure, it is possible to determine the user's indoor location only by installing the reflective surface (for example, a mirror coated in different colors) indoors, thereby implementing the indoor positioning system with high accuracy at a low infrastructure construction cost.

[Description of Drawings]

FIG. 1 is a schematic diagram showing an indoor positioning system according to an embodiment.
FIG. 2 is a diagram showing a structure of a reflective surface according to an embodiment.
FIG. 3 is a block diagram showing the architecture of an indoor positioning system according to an embodiment.
FIG. 4 is a schematic diagram showing an indoor positioning system for a plurality of users according to an embodiment.
FIG. 5 is a schematic diagram showing an indoor positioning system according to another embodiment.
FIG. 6 is a block diagram showing the architecture of an indoor positioning system according to another embodiment.
FIG. 7 is a schematic diagram showing an indoor positioning system for a plurality of users according to another embodiment.
FIG. 8 is a flowchart showing an indoor positioning method according to an embodiment.

[Best Mode]

While embodiments will be hereinafter described in detail with reference to the accompanying drawings and the context described in the accompanying drawings, the scope of the claimed subject matter is not restricted or limited by the embodiments.

The terms as used herein are general terms selected as those being now used as widely as possible in consideration of functions, but they may differ depending on the intention of those skilled in the art or the convention or the emergence of new technology. Additionally, in certain cases, there may be terms arbitrarily selected by the applicant, and in this case, the meaning will be described in the corresponding description part of the specification. Accordingly, it should be noted that the terms as used herein should be interpreted based on the substantial meaning of the terms and the context throughout the specification, rather than simply the name of the terms.

Additionally, the embodiments described herein may have aspects of entirely hardware, partly hardware and partly software or entirely software. The term "unit", "module", "device", "server" or "system" as used herein refers to a computer related entity such as hardware, a combination of hardware and software, or software. For example, the unit, module, device, server or system may refer to hardware that makes up all or part of a platform and/or software such as an application for running the hardware.

Hereinafter, the exemplary embodiments will be described in more detail with reference to the accompanying drawings.

**Indoor positioning system using reflected light**

**(Embodiment 1)**

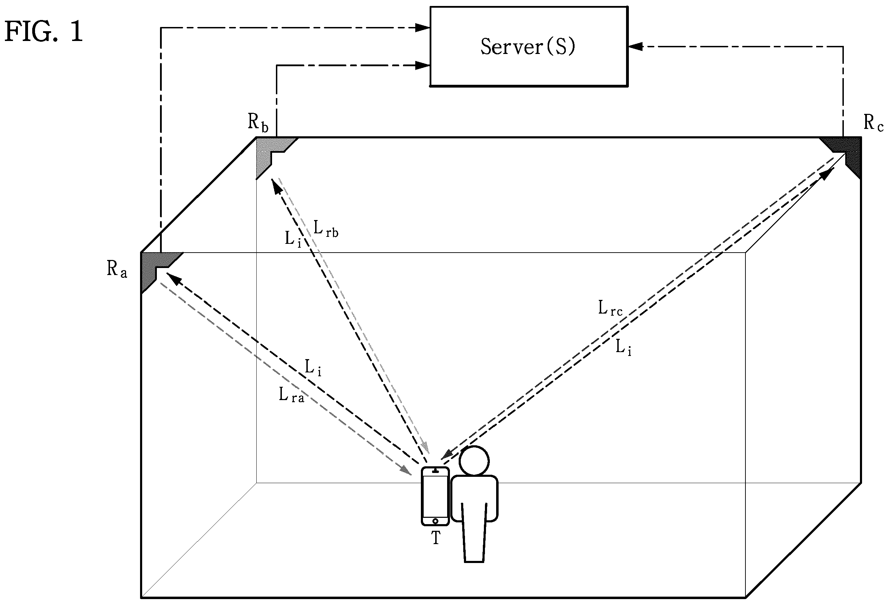

FIG. 1 shows an indoor positioning system using reflected light according to embodiment 1. Referring to FIG. 1, the indoor positioning system according to an embodiment includes a reflection unit including reflective surfaces $R_a$, $R_b$, $R_c$, a server S to store location information of each reflective surface, and a user terminal T for performing a user location determination process.

The reflective surfaces may be installed at a predetermined interval in a building, for example, an airport, a shopping mall and a general hospital. Although not limited to a particular installation location, it is desirable to install on the ceiling in the building to prevent an optical signal from being blocked by obstacles such as pedestrians or furniture. The reflective surfaces may be distributed at each corner of the indoor space as shown in FIG. 1 to improve positioning accuracy, while they may be installed at one location, taking visibility into account.

To determine the user location using triangulation, the number of reflective surfaces may be three or more, but is not limited thereto. For example, in case that the number of reflective surfaces is one or two, information that the user is located within a predetermined distance from the reflective surface may be acquired. Alternatively, when the user's height (a location on the z axis) is known, the user location can be determined only by determining a two-dimensional (2D) location, and thus in case that the number of reflective surfaces is two, it is possible to determine the user's accurate location. Additionally, when the indoor space is a one-dimensional (1D) environment such as a long corridor, a rough location of the user may be determined using only one reflective surface. Further, when combined with location prediction using the signal intensity of an access point (AP) or a mobile network, it is possible to determine the location just in case of one or two reflective surfaces.

The following embodiment will be described based on three reflective surfaces for brief description and to help understanding of the principle of the present disclosure.

Referring to FIG. 1, each reflective surface $R_a$, $R_b$, $R_c$ is configured to reflect an incident optical signal $L_i$ from the user terminal T as reflected light $L_{ra}$, $L_{rb}$, $L_{rc}$ of different frequencies (wavelengths), i.e., different colors (green, blue, red). To this end, each reflective surface may include a filter to reflect only a specific frequency.

In an embodiment, each reflective surface is a mirror coated in a corresponding color to the specific frequency. Describing with reference to FIG. 1, the optical

signal $L_i$ outputted from the user terminal T is reflected as reflected light $L_{ra}$ of green wavelength by the reflective surface $R_a$ coated in green, reflected light $L_{rb}$ of blue wavelength by the reflective surface $R_b$ coated in blue, and reflected light $L_{rc}$ of red wavelength by the reflective surface $R_c$ coated in red.

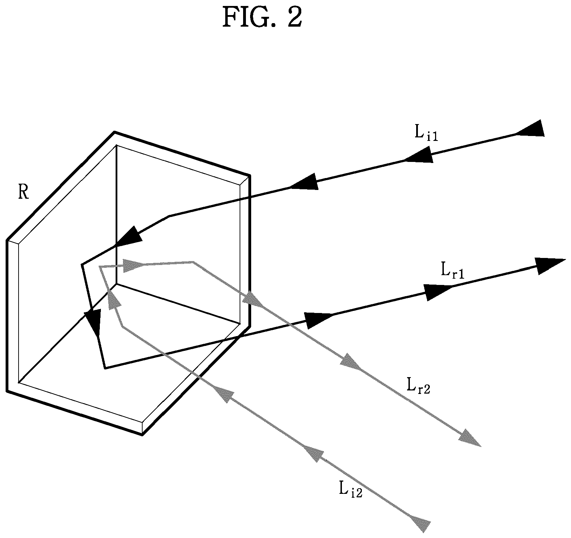

In an embodiment, each reflective surface has a structure in which an angle of incidence and an angle of reflection of the optical signal are equal to each other. As shown in FIG. 2, the reflective surface R of a corner reflector structure reflects the incident light $L_{i1}$, $L_{i2}$ multiple times back in the incident direction. That is, the reflected light $L_{r1}$, $L_{r2}$ is returned in the incident direction and reaches the user terminal.

Although FIG. 1 depicts a frequency difference of reflected light corresponding to visible light as a color difference of light, the present disclosure is not limited thereto. For example, when the optical signal of infrared light, not visible light, is used, each reflective surface may be configured to reflect infrared light of different frequencies.

The server S stores location information of the reflective surfaces $R_a$, $R_b$, $R_c$. The stored location information of the reflective surface is transmitted to the user terminal T via a wireless network as per the user's request. In other embodiment described below, the server S may not only store the location information of the reflection unit but also directly determine the user location using given information or transmit the determined location to an external monitoring center.

Additionally, the location information of the reflective surface may be pre-stored as data on an application running on any other component than the server S, for example, the user terminal, and the user may read a quick response (QR) code (including location information of each terminal) attached indoors using the terminal or manually input the location information of the reflective surface. Accordingly, downloading the location information of the reflective surface uploaded on the server S is just an example for the user to determine the location information of the reflective surface.

The user terminal T calculates the distance to each reflective surface by transmitting and receiving the optical signal, and determines the user location using the distance information between the user and the reflective surface and the location information of the reflective surface. The user terminal T may be a separate electronic device including a processor, and may be a commercial electronic device such as a smartphone in combination with an optical transmission/reception module.

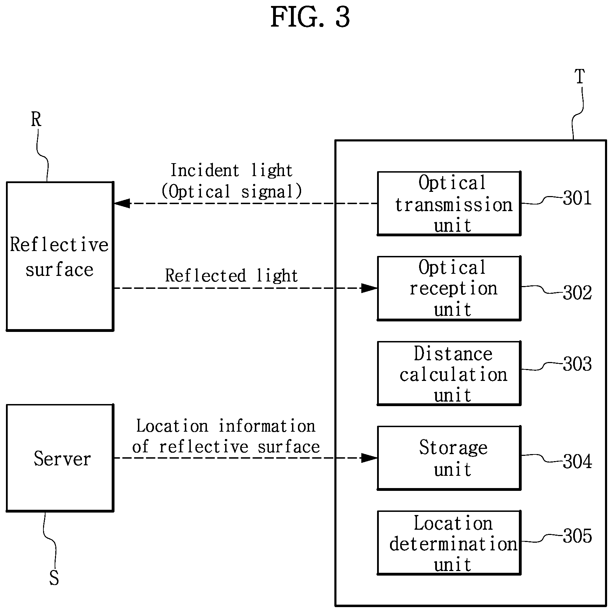

FIG. 3 is a block diagram showing the architecture of the indoor positioning system according to an embodiment. Referring to FIG. 3, the user terminal T includes an optical transmission unit 301, an optical reception unit 302, a distance calculation unit 303, a storage unit 304 and a location determination unit 305.

The optical transmission unit 301 outputs the optical signal from the terminal. For example, the optical transmission unit may be a light-emitting diode (LED) and a camera flash for outputting white light, and when infrared light is used, the optical transmission unit may include an infrared output device.

In an embodiment, the optical signal has identification code to identify the user, in order to determine the location of each of a plurality of users in the same indoor space, and obtain a desired gain value at a long distance using Code-Division Multiple Access (CDMA) based random code such as a global positioning system (GPS) signal or modulation.

Referring back to FIG. 1, the optical signal $L_i$ outputted from the optical transmission unit 301 moves forward and reaches the reflective surfaces $R_a$, $R_b$, $R_c$ installed on the building ceiling. The incident optical signal $L_i$ is light having different frequencies (wavelengths) for each reflective surface, and for example, it is reflected as the reflected light $L_{ra}$ of green wavelength by the reflective surface $R_a$ coated in green, the reflected light $L_{rb}$ of blue wavelength by the reflective surface $R_b$ coated in blue, and the reflected light $L_{rc}$ of red wavelength by the reflective surface $R_c$ coated in red.

The optical reception unit 302 receives the reflected light of different frequencies reflected from each reflective surface. The optical reception unit 302 may separately sense each optical signal of different frequencies, and may be implemented as an image sensor, a photo-diode and a color sensor. Taking FIG. 1 as an example, the optical reception unit 302 senses each of green light Lra, blue light $L_{rb}$ and red light $L_{rc}$ and transmits information about the arrival time of the optical signal to the distance calculation unit 303.

The distance calculation unit 303 calculates the distance from the user terminal T to the reflective surface R based on the information acquired from the reflected optical signal received by the optical reception unit 302. In an embodiment, the distance calculation unit 303 calculates the distance from the user terminal T to each reflective surface $R_a$, $R_b$, $R_c$ based on a time difference between the time at which the optical transmission unit 301 transmitted the optical signal and the time at which the optical reception unit 302 received the reflected light. In another embodiment, the distance calculation unit 303 may calculate the distance from the user terminal to the reflective surface using the carrier-phase measurement of the reflected optical signal received by the reflection unit. Besides, a variety of methods for receiving the reflected light and calculating the distance between the transmission unit and the reflective surface therefrom may be used, and the present disclosure is not limited to a particular method and means.

Hereinafter, the method for calculating the distance using a difference between the transmission time and the reception time of the optical signal will be described. For example, when the time at which the optical transmission unit 301 outputted the optical signal $L_i$ is $t_1$, and the time at which the optical signal $L_{ra}$ reflected by the reflective surface $R_a$ was sensed by the optical re-

ception unit 302 is $t_2$, the distance $d_a$ from the user terminal T to the reflective surface $R_a$ may be represented as the following Equation (where c denotes the speed of light).

[Equation 1]

$$d_a = \frac{1}{2} \times (t_2 - t_1) \times c$$

In the same way, the distance calculation unit 303 may calculate the distance $d_b$ from the user terminal T to the reflective surface $R_b$ and the distance $d_c$ from the user terminal T to the reflective surface $R_c$. The general form may be given below.

[Equation 2]

$$d_i = \frac{1}{2} \times (t_{ix} - t_x) \times c$$

Here, $d_i$ denotes the distance from the user to the $i^{th}$ reflective surface $R_i$, $t_x$ denotes the time at which the terminal (the optical transmission unit) transmitted the optical signal, $t_{ix}$, denotes the time at which the user received the optical signal reflected from the $i^{th}$ reflective surface, and c denotes the speed of light.

According to another embodiment, the distance calculation unit 303 may calculate the distance using the carrier-phase measurement of the received reflected optical signal. The carrier-phase measurement of the reflected optical signal received by the optical reception unit may be modeled as below.

[Equation 3]

$$\Phi_i = d_i - N_i \bullet \lambda$$

Here, $\Phi_i$ denotes the carrier-phase measurement of the optical signal reflected from the $i^{th}$ reflective surface, $d_i$ denotes the distance from the user to the $i^{th}$ reflective surface $R_i$, $N_i$ denotes an unknown integer of the carrier-phase measurement, and $\lambda$ denotes the wavelength of the signal.

When the unknown integer $N_i$ in the carrier-phase measurement is determined, the distance information may be obtained from the carrier-phase measurement, and the user location may be calculated using triangulation based on the distance information. The determination of the unknown integer may use the existing common method such as Carrier-phase Differential GPS (CDGPS), Real-Time Kinematic (RTK) and Precise Point Positioning (PPP) of satellite navigation systems. Using this, it is possible to obtain higher positioning accuracy than the existing method due to the characteristics of the carrier-phase measurement.

According to another embodiment, the distance calculation unit 303 may determine the user location using a distance difference between each reflective surface and the user, not the distance from each reflective surface to the user, for example, the existing distance calculation method such as Time Difference of Arrival (TDOA). In this case, when compared with the method for calculating the location using the distance, the location may be calculated without information about the time $t_x$ at which the terminal transmitted the optical signal, but an additional reflective surface serving as the reference may be necessary (for example, to determine a three-dimensional (3D) location, at least four reflective surfaces are required).

The methods according to the embodiments described above are provided for illustrative purposes, and a variety of other methods may be used to acquire the distance information as described above.

The storage unit 304 downloads the location information of the reflective surfaces $R_a$, $R_b$, $R_c$ from the server S and stores it in the terminal. Alternatively, the location information of the reflective surface acquired by reading a QR code or the location information of the reflective surface directly inputted by the user may be stored without using the server. The location information of the reflective surface corresponds to each coordinate information based on map information in the building, or coordinate information based on the global coordinate system used in GPS, or coordinate information determined by any other method. The user downloads the location information of the reflective surface of the corresponding building from the server S using a communication module of the terminal, or reads QR code or manually inputs, and the location information of the reflective surface is stored in the storage unit 304 including a memory.

The location determination unit 305 determines the user location (specifically, the location of the user terminal T) based on the stored location information of the reflective surfaces and the distance information $d_a$, $d_b$, $d_c$ from the user terminal to each reflective surface calculated by the distance calculation unit 303.

When the distance between one point and the user is known, it is easy to know that the user is located within a predetermined distance from the point (the location is determined in a circular shape), and when the distance between two points and the user is known, the user location may be determined in 2D. Further, when the distance from three points to the user is known, the user's 3D location may be accurately determined using triangulation.

The triangulation is a method for measuring a location in a wide region, and is used to determine a location in the plane using a mathematical expression whereby when the length of one side and two angles of a triangle are known, the length of the remaining side can be calculated.

According to embodiment 1 of the present disclosure, the distance information from the user to the reflective surface may be acquired using a difference between the transmission time and the reception time of the optical signal, and the user information may be determined by triangulation using the location information of each reflective surface pre-stored in the server.

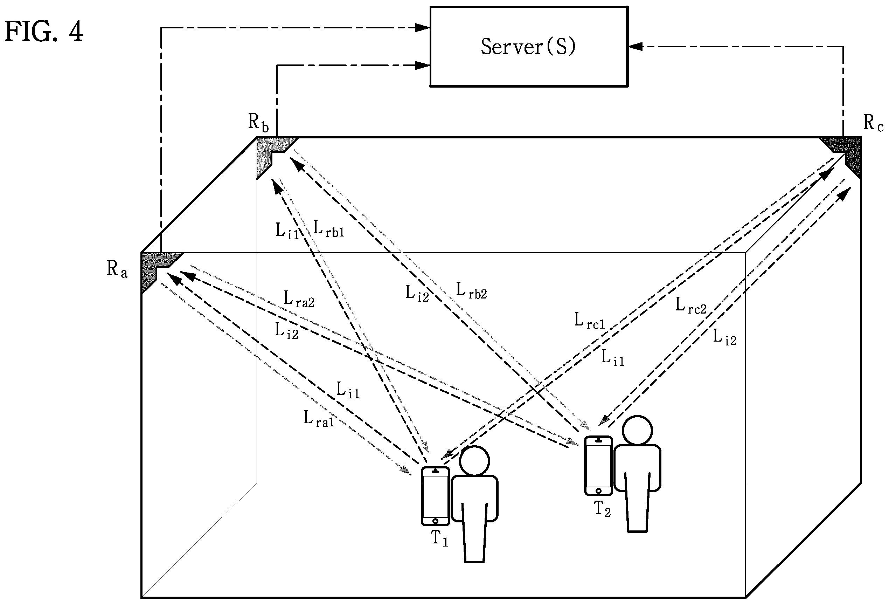

FIG. 4 is a schematic diagram showing the indoor positioning system for a plurality of users. According to an embodiment, the optical signal has identification code to identify the user, thereby determining the location of each of the plurality of users in the same indoor space.

Referring to FIG. 4, the user terminal $T_1$ determines the location of the user terminal $T_1$ by transmitting the optical signal $L_{i1}$ including specific identification code, and receiving the reflected light $L_{ra1}$, $L_{rb1}$, $L_{rc1}$ reflected from each reflective surface. Meanwhile, the user terminal $T_2$ determines the location of the user terminal $T_2$ by transmitting the optical signal $L_{i2}$ including different identification code from the optical signal $L_{i1}$, and receiving the reflected light $L_{ra2}$, $L_{rb2}$, $L_{rc2}$ reflected from each reflective surface.

Each terminal performs the location determination task by sensing only the optical signal including the specific identification code in the reflected light, and thus is not affected by the optical signal outputted from other terminal in the same space. Accordingly, the plurality of users can use the indoor positioning system at the same time.

**(Embodiment 2)**

In the above-described embodiment 1, the user terminal transmits and receives the optical signal, the reflective surfaces coated in different colors are installed on the ceiling, and the user location is determined using the distance between the user and the reflective surface calculated by the terminal. In the following embodiment 2, a plurality of modules installed on the ceiling transmits and receives an optical signal, a reflection unit possessed by a user reflects the incident light, and a server determines the user location using the distance between the user and the module.

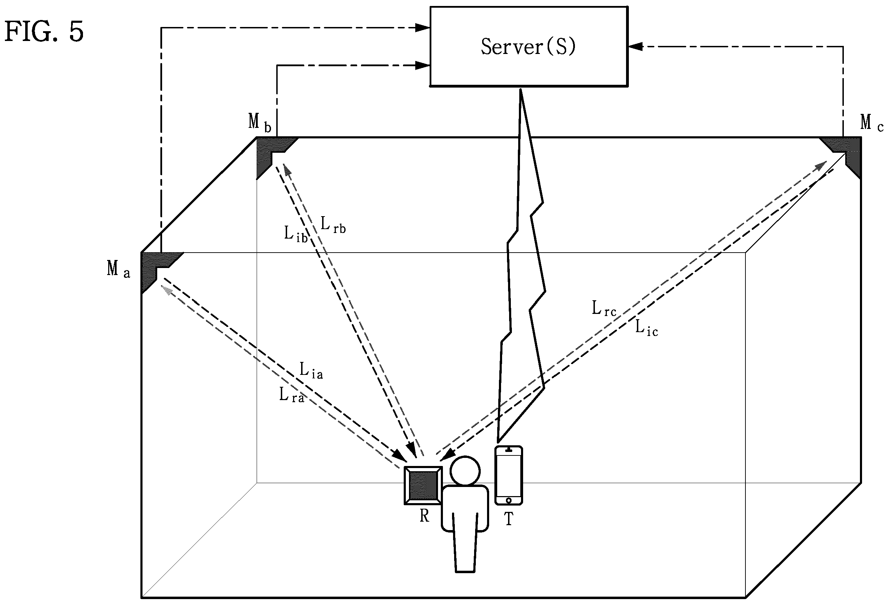

FIG. 5 shows an indoor positioning system using reflected light according to embodiment 2. Referring to FIG. 5, the indoor positioning system includes a plurality of optical transmission/reception modules $M_a$, $M_b$, $M_c$ installed indoors and a reflection unit R configured to reflect an incident optical signal, and may further include a server S or a user terminal T to determine or receive the user's indoor location information.

The reflection unit R is a portable or wearable reflector (for example, a badge or wristband type mirror that can be attached to clothes), and reflects back each optical signal $L_{ia}$, $L_{ib}$, $L_{ic}$ outputted from the optical transmission/reception modules $M_a$, $M_b$, $M_c$ in the incident direction. As described above with reference to FIG. 2, the reflection unit R of a corner reflector structure reflects the incident light $L_{i1}$, $L_{i2}$ multiple times back in the incident direction, and the reflected light $L_{r1}$, $L_{r2}$ is returned in the direction in which the optical signals enter, and reaches the optical transmission/reception modules $M_a$, $M_b$, $M_c$.

The reflected optical signals $L_{ra}$, $L_{rb}$, $L_{rc}$ are sensed by optical sensors provided in the optical transmission/reception modules $M_a$, $M_b$, $M_c$, and each module calculates the distance between the reflective surface and the module based on information at the time when the reflected light is sensed, and the calculated distance is used to determine the user location together with the location information of the modules.

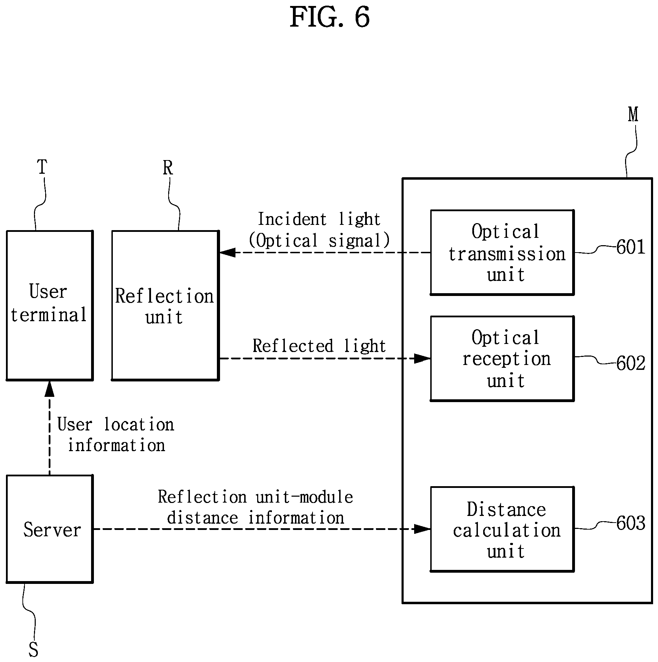

FIG. 6 is a block diagram showing the architecture of the indoor positioning system according to another embodiment. Referring to FIG. 6, each of the optical transmission/reception modules $M_a$, $M_b$, $M_c$ includes an optical transmission unit 601, an optical reception unit 602 and a distance calculation unit 603. However, this structure is just an exemplary structure according to an embodiment, and in other embodiment, the distance calculation unit 603 may be included in one of the server S, the user terminal T and an external computer device, not the optical transmission/reception module M.

In an embodiment, the optical signal outputted from the optical transmission unit 601 may include different identification codes for each module. That is, each of the optical signal La outputted from the module $M_a$, the optical signal $L_{ib}$ outputted from the module $M_b$ and the optical signal $L_{ic}$ outputted from the module $M_c$ includes different identification codes to identify them. The reason of identifying each optical signal is because it is necessary to individually measure the distance from the optical transmission/reception module to the user in order to determine the user location using the distance information. When it is impossible to identify the optical signals, the reflected light of the optical signal outputted from a module may be sensed by the optical reception unit of a different module, failing to correctly measure the distance.

A simpler method for identifying the optical signals is to differently set the frequency (color) of the optical signal outputted from each module to allow the optical reception unit (the sensor) of each module to sense only the reflected light of a specific frequency. However, to determine the locations of a plurality of users as described below, it requires the use of the reflected light reflected in different frequencies by different reflection units (mirrors), and thus this method may be used to determine the location of a single user.

The location information of the optical transmission/reception module corresponds to each coordinate information based on map information in the building, or coordinate information based on the global coordinate system used in GPS, or coordinate information determined by any other method

As described above, the optical transmission unit 601 may be an LED and a camera flash for outputting white light, and when an infrared, not visible, optical signal is used, instead, the optical transmission unit 601 may include an infrared output device.

Referring back to FIG. 5, the optical signal $L_i$ outputted from the optical transmission unit 601 moves forward and reaches the reflection unit R possessed by the user. Specifically, the incident optical signal La from the module $M_a$ is reflected as the reflected light $Lr_a$, the incident optical signal $L_{ib}$ from the module $M_b$ is reflected as the reflected light and the incident optical signal Lie from the module $M_c$ is reflected as the reflected light $Lr_c$.

Referring to FIG. 6, the optical reception unit 602 receives the reflected light of different identification codes reflected from the reflection unit R. The optical reception unit 602 is required to separately sense each of the optical signals of different identification codes. The information of the reflected light is transmitted to the distance calculation unit 603 and used to calculate the distance from the reflection unit R to each optical transmission/reception module $M_a$, $M_b$, $M_c$.

The distance calculation unit 603 calculates the distance from the optical transmission/reception module M to the user (specifically, the distance to the reflection unit R) based on a time difference between the time at which the optical transmission unit transmitted the optical signal and the time at which the optical reception unit received the reflected light.

For example, when the time at which the optical transmission unit 601 outputted the optical signal is $t_1$, and the time at which the optical signal reflected by the reflection unit R was sensed by the optical reception unit 602 is $t_2$, the distance d from the optical transmission/reception module to the user may be represented as the following Equation (where c is the speed of light).

[Equation 4]

$$ d = \frac{1}{2} \times (t_2 - t_1) \times c $$

Using this, each distance calculation unit 603 may calculate the distance $d_a$, $d_b$, $d_c$ from each module $M_a$, $M_b$, $M_c$ to the reflection unit R possessed by the user. In another embodiment, the distance calculation unit 603 may calculate the distance from the user terminal to the reflective surface using the carrier-phase measurement of the reflected optical signal received by the reflection unit. Besides, a variety of methods for receiving the reflected light and calculating the distance between the transmission unit and the reflective surface therefrom may be used as described above.

The user location is determined based on the location information of the optical transmission/reception module and the distance information from the optical transmission/reception module to the user. The entity which determines the location may be variously set accordingly to the embodiments. For example, when a processor provided in the optical transmission/reception module directly calculates the user location and transmits it to the user terminal, or transmits necessary information (the location information of the module, the distance information between the module and the reflection unit) to the user terminal via data link, the processor in the terminal may calculate the user location. Alternatively, an integration server connected via a network may manage the location information of the module and the distance information, determine the user location and transmit it to the terminal. Here, the server is a concept including a computer hardware on which a server program runs. That is, the processor of the server computer may determine the user location using the distance information received from the module and the pre-stored location information of the module.

When the number of optical transmission/reception modules is one, it is easy to know that the user is located within a predetermined distance from the module (the location is determined in a circular shape), and when the number of optical transmission/reception modules is two, the user location may be determined in 2D. Further, when the number of optical transmission/reception modules is three or more, it is possible to accurately determine the user's 3D location. Alternatively, when the user's height (the location on the z axis) is known, the user location may be determined only by determining a 2D location, and thus in case that the number of modules is two, it is possible to determine the user's accurate location. Additionally, when the indoor space is a 1D environment such as a long corridor, a rough location of the user may be determined using only one reflective surface. Further, when combined with location prediction using the signal intensity of an AP or a mobile network, it is possible to determine the location just in case of one or two modules.

Referring to FIGS. 5 and 6, the server S may transmit the indoor location information of the user to the user terminal T. The terminal (a smartphone) may provide an indoor location based customized service to the user using the finally determined location information. The user terminal may include a wireless network module for receiving the location information from the server S in real time, and may run applications for a variety of services based on this. To track and monitor the user location in the indoor space, the process of transmitting the location information to the user terminal may be omitted.

According to embodiment 2 of the present disclosure, the distance information from the reflection unit possessed by the user to the optical transmission/reception module may be acquired using a difference between the transmission time and the reception time of the optical signal, and the user location may be determined using the location information of each module pre-stored in the server or the memory of the module.

According to an embodiment, the reflection unit possessed by each user includes a filter to reflect light of a specific frequency in the incident optical signal. For example, each reflection unit $R_1$, $R_2$ possessed by the user may be a mirror coated in different colors to reflect the incident reflected light in different colors.

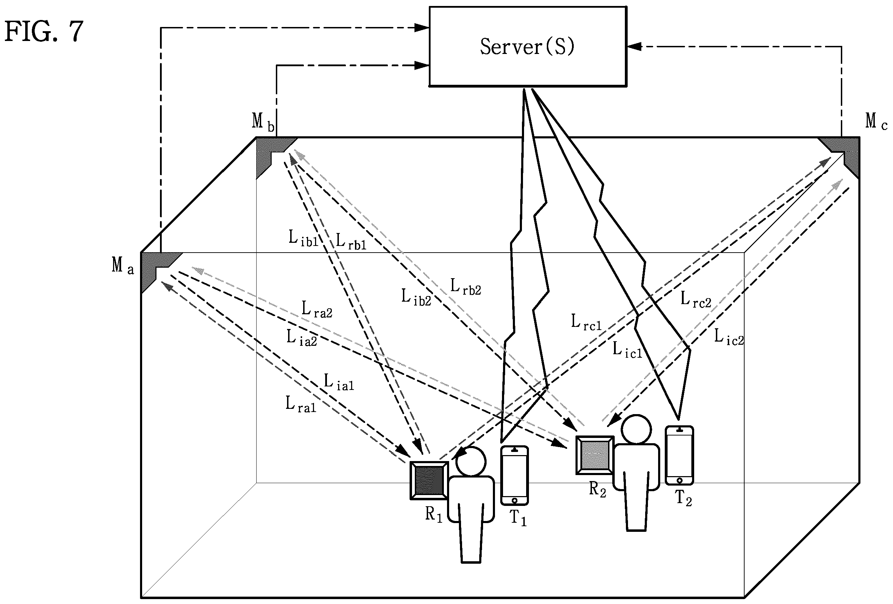

Describing with reference to FIG. 7, the incident light $L_{ia}$, $L_{ib}$, $L_{ic}$ outputted from the optical transmission/reception modules $M_a$, $M_b$, $M_c$ is reflected from the reflection unit $R_1$ possessed by user 1 ($L_{ra1}$, $L_{rb1}$, $L_{rc1}$) and the reflection unit $R_2$ possessed by user 2 to have different frequencies $L_{ra2}$, $L_{rb2}$, $L_{rc2}$. Each reflected light has different frequencies (colors) and is separately sensed by the optical reception unit. That is to say, when the plurality of users located in the same indoor space has the reflection units coated in different colors, the user location may be separately determined.

The user location information calculated by the server S is transmitted to each user terminal $T_1$, $T_2$ as per the request. Each user terminal may include the wireless network module for receiving the location information from the server S in real time, and may run applications for a variety of services based on this.

### Other embodiments

The system of the present disclosure may be embodied in a variety of forms other than the above-described embodiments 1 and 2. All the following embodiments share the important technical feature of determining the indoor location of the user using the reflected optical signal, but the entity which generates location data using information may be different.

In the embodiment 1, the user terminal determines the user location using the distance information between the terminal and the reflective surface and the location information of the reflective surfaces, but according to an embodiment, the terminal may transmit the distance information to the server, and the server computer may determine the user location using the stored location information of the reflective surface. The determined user location information may be transmitted to a manager (for monitoring and tracking), or provided to the user through the application of the terminal.

In the embodiment 2, the server determines the user location using the distance information acquired by the optical transmission/reception module, but according to an embodiment, the optical transmission/reception module may directly transmit the distance information to the user terminal, not the server, and the terminal may download the location information of the module from the server and directly determine the indoor location of the user. On the contrary, the user location information may be uploaded onto the server and used by the manager for a variety of purposes.

### Indoor positioning method using reflected light

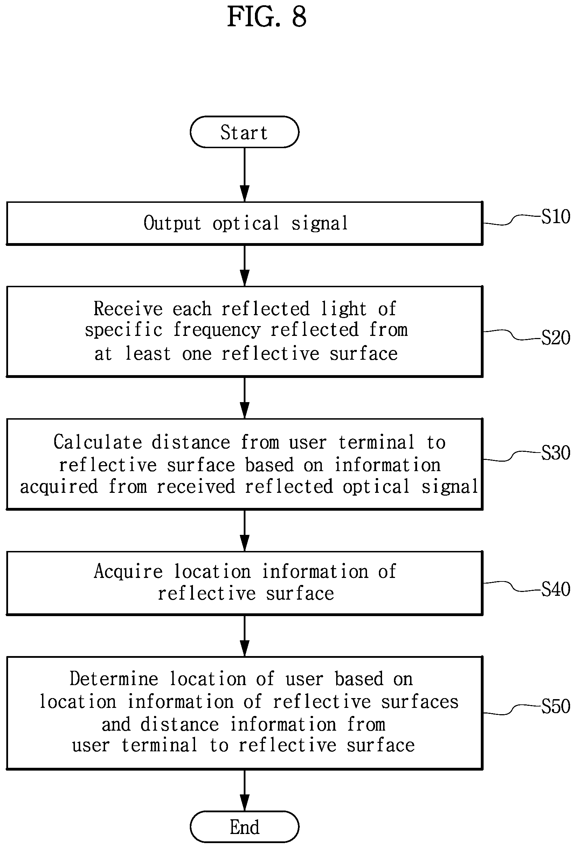

FIG. 8 is a flowchart showing an indoor positioning method according to an embodiment. The indoor positioning method is performed in a user terminal (for example, a smartphone, a wearable device, a laptop, a tablet PC) including a processor, an optical signal output unit (a transmission unit) and a sensing unit (a reception unit).

According to an embodiment, first, the step of transmitting (outputting) an optical signal by the user terminal is performed (S10). The optical signal may be white light, and in case that a plurality of users uses the optical signal, the optical signal may include identification code to identify the users as described above.

Subsequently, the optical signal is reflected as light of different frequencies from at least three reflective surfaces installed on the ceiling at an interval, and each reflective surface may include a filter to reflect only a specific frequency in the optical signal, and may be a mirror coated in a corresponding color to the specific frequency. Each reflective surface may be a corner reflector structure in which the angle of incidence and the angle of reflection of the optical signal are equal to each other.

Subsequently, the user terminal senses each optical signal reflected from the reflective surfaces (S20). As described above, each optical signal has different wavelengths (colors), and for example, when reflected by the reflective surface coated in red, it has a red tinge (about 630-780 nm wavelength), when reflected by the reflective surface coated in green, it has a green tinge (about 500-570 nm wavelength), and when reflected by the reflective surface coated in blue, it has a blue tinge (about 400-480 nm wavelength). To sense each optical signal separately for each wavelength, the optical reception unit may be an image sensor, a photo-diode and a color sensor.

Subsequently, the step of calculating each distance from the user terminal to each reflective surface based on information acquired from the received reflected optical signal may be performed (S30). When a difference between the transmission time of the optical signal and the reception time of the reflected light is used, each distance is calculated using the above Equations (1) and (2). According to another embodiment, each distance may be calculated using the carrier-phase measurement of the received reflected optical signal.

Subsequently, the step of acquiring location information of each reflective surface is performed (S40). The location information of the reflective surface indicates coordinate information of each reflective surface determined based on map information in the building or the global coordinate system or by any other method. The location information of the reflective surface may be acquired by downloading from the server via a wireless network as per the user's request, reading a QR code attached indoors, or manually inputting by the user. The acquired location information is stored in the memory of the terminal.

Subsequently, the step of determining the user location based on the location information of the reflective surfaces and the distance information between the user terminal and the reflective surface is performed (S50). For example, when at least three reflective surfaces are known and the distance from the user to each reflective surface is known, the user location may be determined using triangulation. However, the present disclosure is not limited thereto and a variety of location determination algorithms may be used.

The indoor positioning method according to an embodiment may be implemented in the form of applications or program instructions that can be executed through a variety of computer components, and recorded in computer-readable recording media. The computer-readable recording media may include program instructions, data files and data structures, alone or in combination.

The program instructions recorded in the computer-readable recording media may be specially designed and configured for the present disclosure and may be those known and available to persons having ordinary skill in the field of computer software.

Examples of the computer-readable recording media include hardware devices specially designed to store and execute the program instructions, for example, magnetic media such as hard disk, floppy disk and magnetic tape, optical media such as CD-ROM and DVD, magneto-optical media such as floptical disk, and ROM, RAM and flash memory.

Examples of the program instructions include machine code generated by a compiler as well as high-level language code that can be executed by a computer using an interpreter. The hardware device may be configured to act as one or more software modules to perform the processing according to the present disclosure, and vice versa.

According to the indoor positioning system and method using reflected light described above, each distance between the terminal and each reflective surface may be separately acquired using the principle that the optical signal outputted from the terminal is reflected as light of a specific frequency (wavelength) by the plurality of reflective surfaces, and the user location may be determined based on the distance combined with the location information of the reflective surfaces.

The existing wireless frequency based indoor positioning system has low accuracy or requires installation and maintenance costs of additional equipment. According to an embodiment of the present disclosure, it is possible to determine the indoor location of the user only by installing the reflective surface, for example, a mirror with a color filter indoors, thereby implementing an indoor positioning system with high accuracy at a low infrastructure construction cost.

While the present disclosure has been hereinabove described with reference to the embodiments, it will be understood by those having ordinary skill in the corresponding technical field that various modifications and changes may be made to the present disclosure without departing from the spirit and scope of the present disclosure set forth in the appended claims.

**Claims**

1. An indoor positioning system using reflected light, comprising:

   a reflection unit including at least one reflective surface; and
   a user terminal for determining a location of a user based on location information of the reflective surface and distance information from the user to the reflective surface,
   wherein the reflective surface is configured to reflect an incident optical signal as reflected light of a specific frequency, and
   the user terminal includes:

      an optical transmission unit to transmit the optical signal;
      an optical reception unit to receive the reflected light of the specific frequency reflected from the reflective surface;
      a distance calculation unit to calculate a distance from the user terminal to the reflective surface based on information acquired from the reflected optical signal received by the optical reception unit;
      a storage unit to store the location information of the reflective surface; and
      a location determination unit to determine the location of the user based on the location information of the reflective surface and the distance information from the user terminal to each reflective surface.

2. The indoor positioning system using reflected light according to claim 1, wherein the distance calculation unit calculates the distance from the user terminal to the reflective surface based on a time difference between a time at which the optical transmission unit transmitted the optical signal and a time at which the optical reception unit received the reflected light.

3. The indoor positioning system using reflected light according to claim 1, wherein the distance calculation unit calculates the distance from the user terminal to the reflective surface using carrier-phase measurement of the reflected optical signal received by the reflection unit.

4. The indoor positioning system using reflected light according to claim 1, wherein the optical signal includes identification code to identify the user.

5. The indoor positioning system using reflected light according to claim 1, wherein the reflective surface includes a filter to reflect the light of the specific frequency in the incident optical signal.

6. The indoor positioning system using reflected light according to claim 5, wherein the reflective surface is a mirror coated in a corresponding color to the specific frequency.

7. The indoor positioning system using reflected light according to claim 1, wherein the reflection unit includes at least two reflective surfaces, and each reflective surface is configured to reflect the incident optical signal as the reflected light of different frequencies.

8. The indoor positioning system using reflected light according to claim 1, wherein the reflective surface has a structure in which an angle of incidence and an angle of reflection of the optical signal are equal to each other.

9. An indoor positioning system using reflected light, comprising:

at least one optical transmission/reception module installed indoors; and
a reflection unit possessed by a user and configured to reflect an incident optical signal,
wherein the optical transmission/reception module includes:

an optical transmission unit to transmit the optical signal including identification code of the optical transmission/reception module;
an optical reception unit to receive the reflected light reflected from the reflection unit; and
a distance calculation unit to calculate a distance from the optical transmission/reception module to the user based on a time difference between a time at which the optical transmission unit transmitted the optical signal and a time at which the optical reception unit received the reflected light, and
wherein the optical transmission/reception module, a server, or the user terminal determines the location of the user based on the location information of the optical transmission/reception module and the distance information from the optical transmission/reception module to the user.

10. The indoor positioning system using reflected light according to claim 9, wherein in case that the optical transmission/reception module or the server determines the location of the user, the optical transmission/reception module or the server transmits the determined location information of the user to the user terminal.

11. The indoor positioning system using reflected light according to claim 9, wherein in case of a plurality of users, the reflection unit possessed by each user is configured to reflect the incident optical signal as the reflected light of different frequencies.

12. The indoor positioning system using reflected light according to claim 9, wherein the reflection unit possessed by each user includes a filter to reflect light of a specific frequency in the incident optical signal.

13. The indoor positioning system using reflected light according to claim 12, wherein the reflection unit possessed by each user is a mirror coated in a corresponding color to the specific frequency.

14. The indoor positioning system using reflected light according to claim 9, wherein the reflection unit has a structure in which an angle of incidence and an angle of reflection of the optical signal are equal to each other.

15. An indoor positioning method using reflected light, performed in a user terminal, comprising:

outputting an optical signal;
receiving reflected light of a specific frequency reflected from each of at least one reflective surface;
calculating a distance from the user terminal to the reflective surface based on information acquired from the received reflected optical signal;
acquiring location information of the reflective surface; and
determining a location of a user based on the location information of the reflective surface and the distance information from the user terminal to the reflective surface.

16. The indoor positioning method using reflected light according to claim 15, wherein the distance from the user terminal to the reflective surface is calculated based on a time difference between a transmission time of the optical signal and a reception time of the reflected light.

17. The indoor positioning method using reflected light according to claim 15, wherein the distance from the user terminal to the reflective surface is calculated using carrier-phase measurement of the received reflected optical signal.

18. The indoor positioning method using reflected light according to claim 16, wherein the reflective surface is a mirror coated in a corresponding color to the specific frequency.

19. The indoor positioning method using reflected light according to claim 15, wherein at least two reflective surfaces are provided, and
each reflective surface is configured to reflect the incident optical signal as the reflected light of different frequencies.

20. A computer program stored in a computer-readable recording medium, for implementing the indoor positioning method using reflected light according to any one of claims 15 to 19.

FIG. 1

# FIG. 2

# FIG. 3

T

R

Incident light
(Optical signal)

Reflective
surface

Reflected light

| Optical transmission unit | 301 |
| Optical reception unit | 302 |
| Distance calculation unit | 303 |

Server

Location information
of reflective surface

| Storage unit | 304 |
| Location determination unit | 305 |

S

FIG. 4

Server(S)

$R_b$

$R_c$

$R_a$

$L_{i1}$ $L_{rb1}$

$L_{ra2}$

$L_{i2}$ $L_{rb2}$

$L_{rc1}$ $L_{rc2}$

$L_{i2}$

$L_{i2}$

$L_{rc1}$

$L_{i1}$

$L_{i1}$

$L_{ra1}$

$T_1$

$T_2$

FIG. 5

# FIG. 6

FIG. 7

Server(S)

$M_b$  $M_c$  $M_a$

$L_{ib1}$  $L_{rb1}$
$L_{rb2}$
$L_{ib2}$
$L_{rc1}$  $L_{rc2}$
$L_{ra2}$  $L_{ic1}$  $L_{ic2}$
$L_{ia2}$
$L_{ia1}$
$L_{ra1}$

$R_1$  $T_1$  $R_2$  $T_2$

EP 3 974 870 A1

# FIG. 8

```
Start
```

↓

| Output optical signal | S10 |

↓

| Receive each reflected light of specific frequency reflected from at least one reflective surface | S20 |

↓

| Calculate distance from user terminal to reflective surface based on information acquired from received reflected optical signal | S30 |

↓

| Acquire location information of reflective surface | S40 |

↓

| Determine location of user based on location information of reflective surfaces and distance information from user terminal to reflective surface | S50 |

↓

```
End
```

## INTERNATIONAL SEARCH REPORT

| | International application No. |
|---|---|
| | PCT/KR2020/007653 |

**A. CLASSIFICATION OF SUBJECT MATTER**

*G01S 17/32(2006.01)i, G01S 7/4915(2020.01)i, H04W 64/00(2009.01)i, G02B 5/08(2006.01)i, G02B 5/20(2006.01)i, G02B 1/10(2006.01)i*

According to International Patent Classification (IPC) or to both national classification and IPC

**B. FIELDS SEARCHED**

Minimum documentation searched (classification system followed by classification symbols)

G01S 17/32; F24F 7/06; G01C 15/00; G01S 13/00; G01S 13/10; G01S 13/70; G01S 13/88; G01S 17/08; G01S 7/481; G06F 3/0354; G01S 7/4915; H04W 64/00; G02B 5/08; G02B 5/20; G02B 1/10

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: indoor, reflection, optical signal, distance

**C. DOCUMENTS CONSIDERED TO BE RELEVANT**

| Category* | Citation of document, with indication, where appropriate, of the relevant passages | Relevant to claim No. |
|---|---|---|
| Y | JP 11-287652 A (KAIJO CORP.) 19 October 1999 | 1-6,8,15-18,20 |
| A | See paragraphs [0007]-[0010] and [0013]; and figures 1-2. | 7,9-14,19 |
| X | KR 10-2017-0078412 A (KOREA INSTITUTE OF MACHINERY & MATERIALS) 07 July 2017 | 9-14 |
| Y | See paragraphs [0022], [0025], [0032], [0034]-[0035] and [0042]-[0043]; and figure 1. | 1-6,8,15-18,20 |
| A | KR 10-2018-0118318 A (DAEGU GYEONGBUK INSTITUTE OF SCIENCE AND TECHNOLOGY) 31 October 2018 See paragraphs [0048]-[0078]; and figures 2-4. | 1-20 |
| A | KR 10-2019-0002865 A (IUCF-HYU (INDUSTRY-UNIVERSITY COOPERATION FOUNDATION HANYANG UNIVERSITY)) 09 January 2019 See paragraphs [0055]-[0108]; and figure 3. | 1-20 |
| A | KR 10-1717274 B1 (KIM, Young Seo) 17 March 2017 See paragraphs [0051]-[0059]; and figure 2. | 1-20 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 SEPTEMBER 2020 (16.09.2020) | **16 SEPTEMBER 2020 (16.09.2020)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

| | | International application No. |
| --- | --- | --- |
| | | **PCT/KR2020/007653** |

| Patent document cited in search report | Publication date | Patent family member | Publication date |
| --- | --- | --- | --- |
| JP 11-287652A | 19/10/1999 | JP 2915896 B1 | 05/07/1999 |
| KR 10-2017-0078412 A | 07/07/2017 | KR 10-1794779 B1 | 09/11/2017 |
| KR 10-2018-0118318 A | 31/10/2018 | None | |
| KR 10-2019-0002865 A | 09/01/2019 | KR 10-1988109 B1 | 11/06/2019 |
| KR 10-1717274 B1 | 17/03/2017 | None | |

Form PCT/ISA/210 (patent family annex) (January 2015)